# EUROPEAN PATENT APPLICATION

(11) **EP 3 236 330 A1**
(43) Date of publication of application: **25.10.2017**
(21) Application number: 17167272.8
(22) Date of filing: 20.04.2017
(51) Int. Cl.: G05B 23/02, B61D 19/02, E05F 15/60, B60J 5/06

(54) **ELECTRIC DOOR MONITORING**

(30) Priority: 20.04.2016 US 201662325096 P; 18.04.2017 US 201715490124
(71) Applicant: Westinghouse Air Brake Technologies Corporation, Wilmerding, Pennsylvania 15148 (US)
(72) Inventor: GOETZELMANN, Alan David, Wheeling, Illinois 60090 (US)
(74) Representative: Cohausz & Florack

(57) **Abstract**

A method of monitoring the mechanical condition of a passenger door on a public transit vehicle wherein the door operator is a brushed direct current electrical motor and comprises the steps of: repeatedly recording a profile of the motor current vs. time following initiation of opening or closing of the door; based on previously recorded profiles establishing acceptable ranges of motor current for times following initiation of opening or closing the door; and comparing an instant motor current profile to the acceptable ranges and indicating a potential fault condition if the motor current is outside the acceptable ranges.

## Description

### CROSS REFERENCE TO RELATED APPLICATIONS

This application claims the benefit of United States Provisional Patent Application No. 62/325,096, filed on April 20, 2016, the disclosure of which is hereby incorporated by reference in its entirety.

### BACKGROUND OF THE INVENTION

### Field of the Invention

This invention is related to maintaining the mechanical condition of passenger doors in a public transit vehicle.

### SUMMARY OF THE INVENTION

Briefly according to this invention, there is provided a method for monitoring the mechanical condition of a passenger door on a public transit vehicle wherein the door operator is a brushed direct current electrical motor. Repeatedly, the profile of the motor current vs. time following initiation of opening or closing of the door is recorded. Based on the recorded profiles, acceptable ranges of motor current for each time following initiation of opening or closing the door are established. An instant current profile is compared to the acceptable ranges and a potential fault condition is indicated if the current is outside the range.

Each time the door moves, the motor current data is analyzed and then saved to a non-volatile data store. Over a period of time, an averaged motor current profile is built based upon the recorded data. In a system that is not defective, the current profile will remain consistent with slight variations. At regular intervals, a copy or copies of the motor current profile will be saved and compared with prior motor profiles. In one embodiment, a determination is made whether the instant motor current profile is within a pre-established acceptable range of the corresponding value of the averaged motor current profile.

### BRIEF DESCRIPTION OF THE DRAWINGS

Further features and other objects and advantages will become apparent from the following detailed description with reference to the drawings wherein:
FIG. 1 shows the arrangement of an exemplary prior art transit door;
FIG. 2 is a schematic diagram showing the features of the apparatus and circuitry for practicing this invention;
FIG. 3 is a high level flow diagram for the computer program used to implement this invention; and
FIG. 4 is a chart showing motor current profiles gathered over three months.

### DESCRIPTION OF THE INVENTION

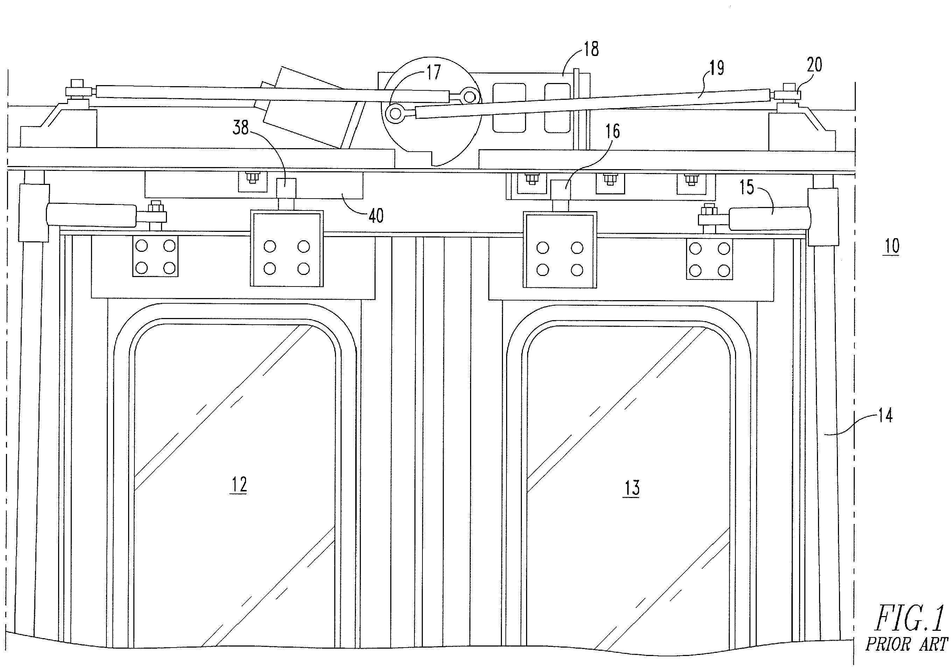

Referring now to FIG. 1, there is shown the inside of a transit vehicle wall 10 with transit vehicle door panels 12,13. There are several well-known types of doors used in transit vehicles referred to as slide-glide doors, swing doors, parallel plug door and outside plug doors all generally used for bus applications. Also well-known are slide-glide and bi-fold doors used on light rail trains. Common to all types of transit vehicle doors is a vertical shaft 14 journaled to the wall near an edge of the door panel when the door is closed. The shaft is connected to the door panel by one or more arm assemblies such that rotation of the shaft results in opening or closing of the door. A mechanical door operator 18 comprising a brushed DC motor is connected to rotate the shaft when a door open or close signal is provided. This invention is not limited to any particular type of transit door but, for purposes of explanation, FIG. 1 illustrates a prior art double slide-glide door. Door panels 12, 13 have a pivotal connection at the top edge near the leading edge (when the door is opening) to an arm assembly 15. The door panels are also hung from a follower 16 near the trailing edge of the door panel that slides in guide track 17 secured above the top edge of the door panel. When the shaft 14 is rotated to pull the door panel inward, the door glides to a position perpendicular to the door opening with the leading edge of the door pointing inwardly. Typically, mounted above the top edge of the door panel is a mechanical door operator 18 for driving connecting rods 19 which, in turn, drives cranks 20, thus rotating the shaft 14.

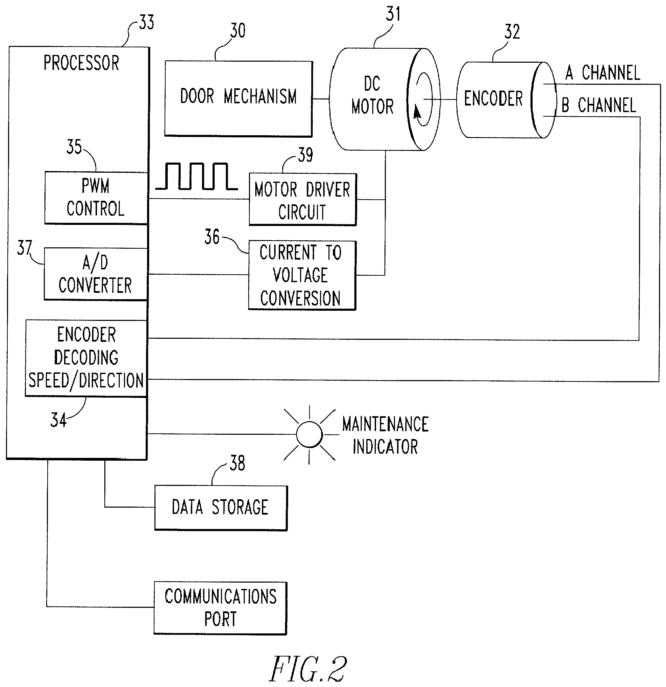

Referring to FIG. 2, the door mechanism 30 comprises a connecting rod, crank, and a rotating door shaft, caused to move the door panel between open and closed position by a direct current brushed electric motor 31.

The output shaft of the electric motor is attached to a rotary encoder 32. The rotary encoder outputs two square waves (A and B) that are 90 degrees out of phase. The encoder outputs a fixed number of pulses per rotation. As is well understood in the art, the A and B pulses, when input to a computer 33, can be used by a decoder program 34 to determine the angle of rotation, and the rotational speed and direction of rotation.

The motor 31 is a brushed DC motor. Its direction and speed is controlled by the DC current applied to the motor windings by a driver circuit 39. The driver circuit is, in turn, controlled by a PMW control program 35 of a computer 33.

The motor current applied to the motor is sensed and converted to a voltage signal at 36 that is digitized by the analog to digital input function 37 of the computer. The digitized current is stored in a computer memory 38 to build motor current profiles vs. time following the opening or closing of the door.

Motor torque is motor current or load related. Applied motor voltage determines speed. Motor rotational speed is self-adjusting until just enough current flows to meet torque requirements. If the load torque increases, the motor will slow enough so that the resulting back emf will allow the current to increase sufficiently to carry the load. Changing motor current is indicative of changing load torque.

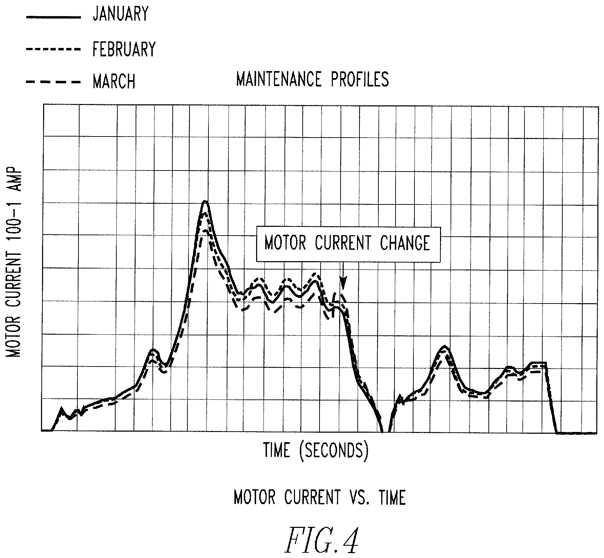

FIG. 4 is a chart showing what a motor current profile could look like when taken over three months. Each profile is the average of many door cycles taken over a month, for example. Some door cycles may be discarded so as not to distort the average of normal door cycles in which no obstruction was encountered.

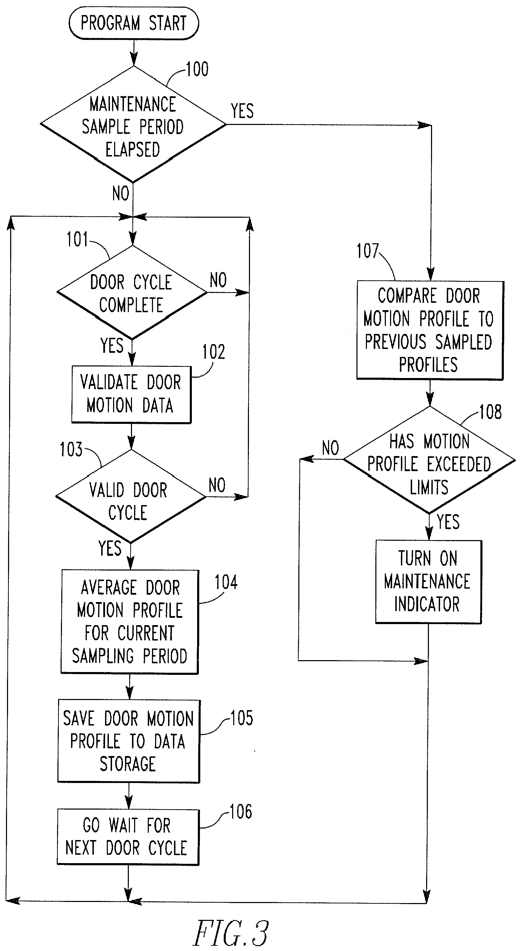

Referring to FIG. 3, the high level flow chart of the maintenance program is set forth. If a maintenance sample period is in effect, the digitized motor current values are input and stored 101, validated 102,103, and used to build the average door profile for the instant sampling period 104. The averaged door motion profile is then stored 105. The program then waits for the next door cycle at 106.

If the maintenance sample period is over, the normal monitoring of the door operation takes place. A door motion profile for an individual opening or closing is input and compared to the previously sampled profiles 107. A test is made to determine if motion profile at any point has exceeded the limits of acceptable deviation 108. If the limits have been exceeded, the door maintenance indicator is turned on.
Having thus defined the invention in the detail and particularity required by the Patent Laws, what is desired protected by Letters Patent is set forth in the following claims.

## Claims

1. A method of monitoring the mechanical condition of a passenger door on a public transit vehicle wherein the door operator is a brushed direct current electrical motor comprising the steps of:
repeatedly recording a profile of the motor current vs. time following initiation of opening or closing of the door;
based on previously recorded profiles establishing acceptable ranges of motor current for times following initiation of opening or closing the door; and
comparing an instant motor current profile to the acceptable ranges and indicating a potential fault condition if the motor current is outside the acceptable ranges.

2. A method of monitoring the mechanical condition of a passenger door on a public transit vehicle wherein the door operator is a brushed direct current electrical motor comprising the steps of:
identifying the current sampling period;
recording a profile of the motor current vs. time following initiation of opening or closing of the door;
validating the profile as having a typical form,
averaging the profile with data already gathered during the sampling period; and
comparing an instant motor current profile to the acceptable ranges based on the average profile for current and/or prior sampling periods and indicating a potential fault condition if the motor current is outside the acceptable ranges.

3. A method of monitoring the mechanical condition of a passenger door on a public transit vehicle wherein the door operator is a brushed direct current electrical motor comprising the steps of:
identifying the current sampling period;
sensing and digitizing motor current;
recording a profile of the digitized motor current vs. time following initiation of opening or closing of the door in a digital processor;
validating the profile as having a typical form;
averaging the profile with data already gathered during the sampling period; and
comparing an instant digitized motor current profile to an acceptable range of deviations from the average profile for the current sampling period and/or a prior sampling period and indicating a potential fault condition if the motor current is outside the acceptable ranges.
